# EUROPÄISCHE PATENTSCHRIFT

(11) **EP 1 129 516 B1**
(45) Veröffentlichungstag und Bekanntmachung des Hinweises auf die Patenterteilung: **16.10.2002**
(21) Anmeldenummer: 99959274.4
(22) Anmeldetag: 08.11.1999
(51) Int. Cl.: H02K 1/00

(54) **BAND ZUR HERSTELLUNG EINES RINGFÖRMIGEN ELEKTROMAGNETISCHEN ELEMENTS FÜR EINE ELEKTRISCHE MASCHINE**
STRIP FOR PRODUCING A RING-SHAPED ELECTROMAGNETIC ELEMENT FOR AN ELECTRIC MOTOR
BANDE SERVANT A PRODUIRE UN ELEMENT ELECTROMAGNETIQUE ANNULAIRE DESTINE A UN MOTEUR ELECTRIQUE

(30) Priorität: 09.11.1998 DE 19851363; 03.08.1999 WO PCT/EP99/05629
(43) Veröffentlichungstag der Anmeldung: 05.09.2001
(73) Patentinhaber: DaimlerChrysler AG, 70567 Stuttgart (DE)
(72) Erfinder: KIRN, Oliver, D-70734 Fellbach (DE); SENN, Georg, CH-5026 Densburen (CH); ZIEKER, Roland, D-73061 Ebersbach (DE)
(86) Internationale Anmeldenummer: EP9908540
(87) Internationale Veröffentlichungsnummer: WO00028639

(56) Entgegenhaltungen:
- DE-A- 19 633 399
- US-A- 3 842 493
- US-A- 5 256 926
- PATENT ABSTRACTS OF JAPAN vol. 1999, no. 3, 31. März 1999 (1999-03-31) & JP 10 322943 A (SHIBAURA ENG WORKS CO LTD), 4. Dezember 1998 (1998-12-04)
- PATENT ABSTRACTS OF JAPAN vol. 1999, no. 13, 30. November 1999 (1999-11-30) & JP 11 215745 A (SHIBAURA MECHATRONICS CORP), 6. August 1999 (1999-08-06)
- PATENT ABSTRACTS OF JAPAN vol. 1999, no. 3, 31. März 1999 (1999-03-31) & JP 10 327545 A (TOSHIBA CORP), 8. Dezember 1998 (1998-12-08)
- PATENT ABSTRACTS OF JAPAN vol. 1996, no. 2, 29. Februar 1996 (1996-02-29) & JP 07 274422 A (YASKAWA ELECTRIC CORP), 20. Oktober 1995 (1995-10-20)

## Beschreibung

Die Erfindung betrifft ein Band zur Herstellung eines ringförmigen elektromagnetischen Elements für eine elektrische Maschine gemäß dem Oberbegriff des unabhängigen Anspruchs.

Aus der DE 26 29 532 C2 ist ein Verfahren zur Herstellung eines ringförmigen Elements aus elektromagnetischem Material bekannt, bei dem ein Band zur Bildung eines Stators oder Rotors einer elektrischen Maschine zu einem Ring aufgerollt wird.

Aus der DE 196 33 399 A1 ist ein Band zur Herstellung eines ringförmigen Elements einer elektrischen Maschine bekannt. Das Band besteht aus voneinander getrennten Segmenten, welche zusammengenommen die Wirkfläche des Elements bilden. Benachbarte Stege sind jeweils durch einen Steg direkt miteinander verbunden.

Es ist die Aufgabe der Erfindung, ein Band anzugeben, mit dem die Fertigung von ringförmigen elektromagnetischen Elementen für elektrische Maschinen vereinfacht wird.

Diese Aufgabe wird bei einem gattungsgemäßen Band gemäß Anspruch 1 durch die Merkmale im kennzeichnenden Teil des Anspruchs gelöst.

Ein erfindungsgemäßes Band ist aus voneinander getrennten Segmenten gebildet, welche zusammengenommen die Wirkfläche des Elements bilden, wobei benachbarte Segmente durch jeweils einen Steg direkt verbunden sind. Der Steg ist der an der Elementaußenseite angeformt. Der Steg ist so geformt, daß er ein elastische Verformung beim Biegen des Bandes aufnimmt, während die Segmente im wesentlichen frei von elastischer Verformung bleiben.
Der besondere Vorteil ist, daß dieser Steg beim Umformen des Bandes aus einem im wesentlichen langgestreckten Zustand zur Ringform dazu führt, daß sich eine im wesentlichen durchgängige, formschlüssige Verbindung der Segmente an ihrer jeweiligen Stoßnaht ausbilden kann. Die Stoßnähte im gebildeten ringförmigen elektromagnetischen Element sind so gut ausgebildet, daß allenfalls ein minimaler Luftspalt zurückbleibt, der praktisch keine elektromagnetischen Verluste nach sich zieht.

Die bevorzugte Geometrie und Anordnung des Stegs sorgt beim Biegen dafür, daß die Kanten entlang der sich bildenden Stoßnaht zwischen den Bereichen in Kontakt kommen und auch weitgehend formschlüssig in Kontakt bleiben. Sonst kann es passieren, daß sich beim Biegen des Bandes die Kanten zwar zuerst in Kontakt kommen, sich aber beim Weiterbiegen entlang der Stoßnaht bereichsweise wieder voneinander lösen. Der sich dabei bildende Luftspalt würde die Funktion des ringförmigen elektromagnetischen Elements in der elektrischen Maschine stark beeinträchtigen.

Das Band ist leicht handhabbar und stabil und ermöglicht eine Rotor- und/oder Statorherstellung mit optimaler Materialausnutzung, etwa beim Ausstanzen des Bandes. Damit wird eine kostengünstige Herstellung von Rotor- und/oder Statorteilen einer elektrischen Maschine möglich.

Die besondere Formgebung des Stegs verhindert weiterhin ein Aufwölben des Stegs beim Biegen, so daß das Band eine plane elektromagnetische Wirkfläche aufweist. Derartige, mittels des Bandes hergestellte Rotoren und/oder Statoren zeigen praktisch keine Verluste durch die Stoßnähte, so daß solche Bauteile auch für Hochleistungsmaschinen verwendet werden können, bei denen etwa der Stator mit einen hohen Magnetfeld beaufschlagt wird, bei dem die elektromagnetische Wirkfläche gesättigt ist. Auch wird verhindert, daß etwaige mechanische Spannungen im Bandmaterial die elektromagnetischen Eigenschaften des Bandes beeinflussen, da der Steg die mechanischen Verformungen aufnimmt. Der Steg selbst kann zwar magnetischen Fluß tragen, zählt bei der Auslegung an sich jedoch vorzugsweise nicht zu der eigentlichen elektromagnetischen Wirkfläche des ringförmigen elektromagnetischen Elements, das mit dem Band gebildet wird.

In einer weiteren bevorzugten Ausführung ist das Band zumindest einseitig mit einer Zahnung versehen, die vorzugsweise als Rotor- und/oder Statorzähne vorgesehen sind. Bei einer bevorzugten Ausführung, bei dem das Band zu einem Stator gebogen wird, werden Statorzähne beim langgestreckten Band mit einer elektrischen Spule aus Spulendraht umwickelt, wobei beim Umwickeln die Querschnittsform des Spulendrahts verändert wird. Damit ist eine vorteilhafte Ausnutzung des Raums zwischen den Statorzähnen möglich. Da dies vor dem Verformen des Bandes erfolgen kann, ist eine maschinelle Herstellung und Anbringung der Spule oder der Spulen möglich, da die Statorzähne zu diesem Zeitpunkt frei zugänglich sind.

In einer weiteren günstigen Ausführung wird beim Wickeln der Spule um den Statorzahn der Außendurchmesser der Spule so verändert, daß der größte Außendurchmesser der Spule am künftigen Nutfuß ausgebildet wird. Die Spule wird damit bereits weitgehend so vorgeformt, wie es ihrer Endform nach dem Biegen entsprechen würde. Damit ist eine weitere vorteilhafte Ausnutzung des Raums zwischen den Statorzähnen möglich. Es können beim Wickeln einer Spule sowohl der Drahtquerschnitt als auch der Durchmesser der Spule verändert werden.

Weitere Vorteile und Ausgestaltungen der Erfindung gehen aus den weiteren Ansprüchen und der Beschreibung hervor.

Die Erfindung ist nachstehend anhand einer Zeichnung näher beschrieben, wobei die Figuren zeigen:
Fig. 1 eine Prinzipdarstellung eines erfindungsgemäßen Bandes,
Fig. 2 eine Detailansicht eines erfindungsgemäßen Bandes,
Fig. 3 eine weitere Detailansicht eines bevorzugten Bandes
Fig. 4 eine weitere bevorzugte Ausführungsform eines erfindungsgemäßen Bandes mit Zahnung und
Fig. 5 mehrere Teilschritte vor (a), während (b), nach (c) dem Umformen eines erfindungsgemäßen Bandes zu einem ringförmigen Element.

Die Erfindung ist für die Herstellung elektrischer Maschinen geeignet, welche einen Stator und einen Rotor aufweisen, wie etwa Asynchronmaschinen, Reluktanzmaschinen und dergleichen.

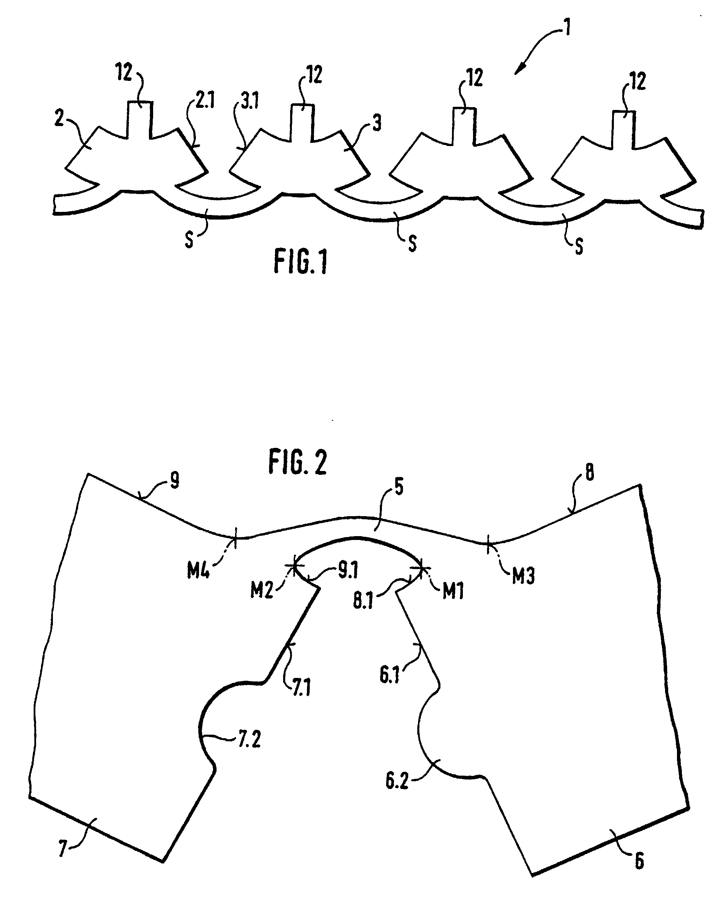

In Fig. 1 ist ein vereinfachtes Prinzipbild eines erfindungsgemäßen Bandes 1 dargestellt. Das Band ist im wesentlichen langgestreckt. Es wird zur Ringform gebogen und bildet dann vorzugsweise einen Stator oder einen Rotor einer elektrischen Maschine.

Das Band 1 ist aus mehreren einzelnen Segmenten zusammengesetzt, die insgesamt Wirkfläche des elektromagnetischen Elements bilden. Jeweils zwei direkt benachbarte Segmente der voneinander getrennten Segmente sind mit jeweils einem Steg S verbunden. Der Steg S ist an der Seite des Bandes 1 angeordnet, die die Außenfläche des ringförmigen Elements bildet. Ein erstes Segment 2 mit einer ersten seitlichen Kante 2.1 ist benachbart zu einem zweiten Segment 3 mit einer zweiten seitlichen Kante 3.1. Das Segment 2 ist mit dem Segment 3 mit einem Steg S verbunden, der von den Kanten 2.1, 3.1 beabstandet ist. Steg S ist materialschlüssig mit den Segmenten 2, 3 verbunden. Die Oberfläche dieser Segmente 2, 3 wie auch der restlichen Segmente des Bandes 1 bilden die eigentliche elektromagnetische Wirkfläche des späteren elektromagnetischen Elements einer elektrischen Maschine. Die Normale der Wirkfläche ist senkrecht zur Bildebene zu denken.

Zusätzlich zeigen die Segmente noch auf der der Seite mit den Stegen S gegenüberliegenden Seite des Bandes 1 eine Zahnung mit jeweils einem Zahn 12. Segmente können auch mehr oder weniger als einen Zahn 12 aufweisen.

Die Zahl der mit Stegen S verbundenen Segmente eines Bandes kann an den Umfang und/oder Krümmungsradius eines ringförmigen elektromagnetischen Elements angepaßt werden, welches aus dem Band gebildet werden soll, und kann kleiner oder größer sein als die Zahl der in der Figur gezeigten Segmente.

Die Stege S können zwar prinzipiell auch Magnetfluß führen, können jedoch bei der Auslegung eines solchen Elements vorzugsweise vernachlässigt werden. Die Stege S verlaufen in diesem Sinn außerhalb der Wirkfläche des elektromagnetischen Elements.

Das Band 1 kann aus Massivmaterial gebildet sein. Vorzugsweise besteht das Band 1 aus einem Blechpakt, wobei die Bleche senkrecht zur Normalen der Wirkfläche aufeinander geschichtet sind. Zweckmäßigerweise wird das Band 1 ausgestanzt, als Blechstapel aus gleichartigen Bändern zusammengesetzt und dann zur Ringform gebogen. Vorzugsweise weist das Band 1 metallische, ferromagnetische oder paramagnetische Eigenschaften auf.

Nach dem Biegen können die Stege S vorteilhaft dazu dienen, als Materialvorrat zu dienen, um die einzelnen Bleche des aus einem bevorzugten Blechpaket bestehende ringförmigen elektromagnetischen Elements mittels Schweißnähten parallel zu der Rotationsachse des Elements zu verbinden.

Die Stege S weist einer Krümmung auf, die gleichsinnig mit der Biegerichtung ist und sind an der Seite des Bandes 1 angeordnet, der als Außenrand des ringförmigen elektromagnetischen Elements vorgesehen ist.

Die Funktion der Stege S besteht darin, die elastische Verformung beim Biegen des Bandes 1 aufzunehmen, so daß die Wirkfläche bzw. ein Segment des Bandes 1 keine Stauchung oder Dehnung in Umfangsrichtung aufnehmen muß. Damit bleibt die Wirkfläche eben, und elastische Verzerrungen beeinflussen nicht die elektromagnetischen Eigenschaften der Segmente des Bandes 1.

Der Steg S ist so geformt, daß beim Biegen die elastischen Verformungen so gut aufgenommen werden, daß die Kanten 2.1 und 3.1 eine Stoßnaht bilden, die im wesentlichen formschlüssig ist und nur einen minimalen Luftspalt verursacht. Dieser Luftspalt ist so gering, daß selbst in Hochleistungsmaschinen, bei denen z.B. der Stator hoch in der magnetischen Sättigung betrieben wird, keine Güteverluste beobachtet werden.

Dieser Vorteil wird durch eine günstige Formgebung des Steges S erreicht, wie in Fig. 2 dargestellt ist. Ohne diese günstige Formgebung kann es geschehen, daß die Kanten im Verlauf des Biegens zwar beginnend von einer ersten Kontaktstelle zuerst in Berührung kommen, dann sich jedoch beim Weiterbiegen wieder voneinander entfernen und einen großen Luftspalt bilden. Die Stoßnaht ist dann nicht formschlüssig geschlossen und führt dann im Einsatz zu elektromagnetischen zu Verlusten.

Fig. 2 zeigt eine Detailansicht eines bevorzugten Bandes 1 mit einem Steg zwischen zwei Segmenten des Bandes. Der Steg 5 verbindet einen ersten Bereich 6 mit einer ersten seitlichen Kante 6.1 und einen zweiten Bereich 7 mit einer zweiten seitlichen Kante 7.1. Der Steg 5 ist gerundet und weist weiche Übergänge zu der Wirkfläche des Bandes 1 auf, in die er im Bereich einer ersten Unterkante 8 in das erste Gebiet 6 und im Bereich einer zweiten Unterkante 9 des zweiten Gebiets 7 mündet. Die Unterkanten 8, 9 und die entsprechenden Unterkanten etwaiger weiterer Segmente des Bandes 1 bilden die Außenseite eines ringförmigen Elements, welches später aus dem Band 1 gebogen wird.

Der Steg 5 und die Bereiche 6, 7 umschließen ein Gebiet, das in etwa Rautenform mit gerundeten Kanten aufweist. Dazu kann man sich die benachbarten Abschnitte 8.1 und 9.1 der Unterkanten 8, 9 bis zu ihrem Schnittpunkt verlängert denken.

Die Stegmitte des Stegs 5 ist schmäler als die Breite des Stegs 5 an den Mündungsbereichen des Stegs 5 in die Bereiche 6, 7 und ist insgesamt die schmalste Stelle des Stegs 5. Sie definiert so eine Sollbiegestelle des Stegs 5 und damit des Bandes 1. Die längere Diagonale D1 der Rautenform verläuft zwischen einem ersten und einem zweiten Mündungspunkt M1 und M2 des Stegs 5 in die Unterkanten 8 und 9.

Die Breite des Stegs 5 am Übergang zu den Bereichen 6, 7 entspricht dem Abstand zwischen dem ersten Mündungspunkt M1 und einem weiteren Mündungspunkt M3 in den Bereich 6 bzw. dem Abstand zwischen dem zweiten Mündungspunkt M2 und einem weiteren Mündungspunkt M4 in den Bereich 7. Vorzugsweise sind diese Abstände gleich.

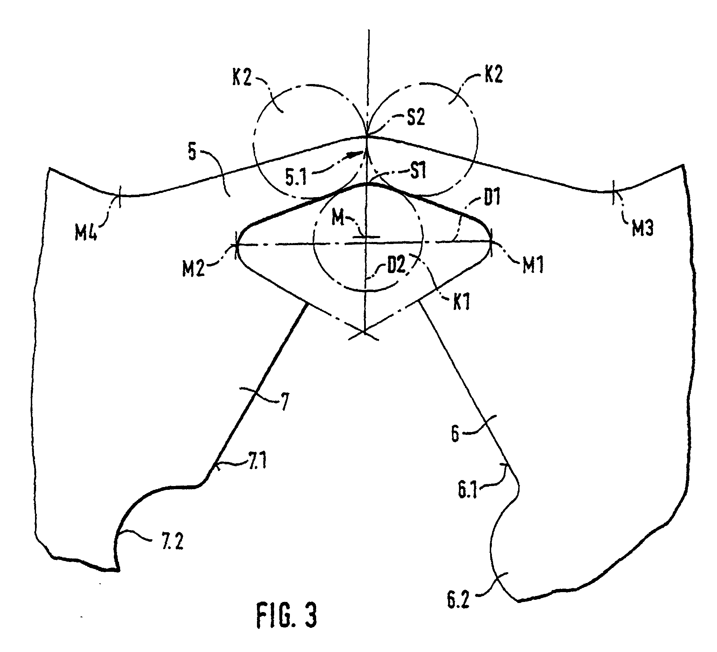

In Fig. 3 ist eine weitere Detailansicht des Stegs gegeben. Die Konturen des Stegs 5 sind vorzugsweise gerundet. Die rauntennahe Kontur des Stegs 5 schmiegt sich im Bereich der Stegmitte 5.1 an einen Kreisbogen eines ersten Kreises K1 an, dessen Mittelpunkt M auf der kürzeren Diagonalen D2 der Rautenform liegt, wobei der Radius R1 des Kreises K1 kleiner ist als die kürzere Diagonale D2. Die gegenüberliegende Stegseite schmiegt sich vorzugsweise an einen Kreisbogen eines weiteren Kreises um denselben Mittelpunkt M an, der einen größeren Radius, aber weniger als den doppelten Radius als der erste Kreis K1 aufweist, vorzugsweise ist der Radius 1,5 bis 1,8 mal so groß.

Die Stegmitte 5.1 ist durch den Schnittpunkt S1 des ersten Kreises K1 mit der kürzeren Diagonalen D2 gegeben.

Die Breite der Stegmitte 5.1 entspricht dabei dem Streckenabschnitt auf einer Verlängerung der kürzeren Diagonalen D2, der zwischen dem stegseitigen Schnittpunkt S1 des ersten Kreises K1 mit der kürzeren Diagonalen D2 und einem Berührungspunkt S2 eines zweiten Kreises K2 mit der Verlängerung der kürzeren Diagonalen D2 liegt, wobei der zweite Kreis K2 den ersten Kreis K1 in einem Punkt nahe S1 berührt. Beide Kreise K1, K2 weisen denselben Radius R1 auf.

In einer weiteren günstigen Weiterbildung der Erfindung ist zusätzlich an den seitlichen Kanten 6.1, 7.1 eine Zahnung ausgebildet, z.B. eine Ausbuchtung 6.2 auf der einen seitlichen Kante 6.1 und eine geometrisch korrespondierende Einkerbung 7.2 auf der anderen seitlichen Kante 7.1, so daß diese Kanten 6.1, 7.1 beim Zusammenbiegen eine Verzahnung bilden. Die Stoßnaht wird so stabiler, und ein möglicher störender Einfluß der Stoßkante auf die elektromagnetischen Eigenschaften wird weiter vermindert. Eine Zahnung wie in der Figur angedeutet ist auch geeignet, den späteren Biegevorgang und das Zusammenführen der Segmentkanten zu unterstützen.

Jedoch können auch mehrere Zähne vorgesehen sein, oder die Zähne oder der Zahn eine andere Form aufweisen als in der Figur dargestellt.

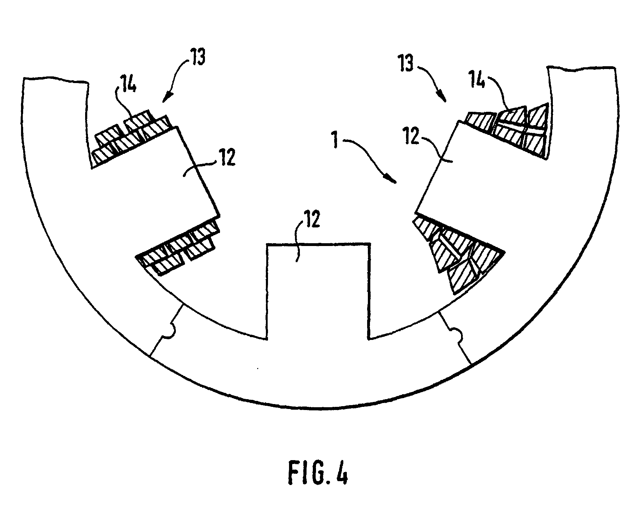

In einer weiteren günstigen Weiterbildung der Erfindung ist zusätzlich an den Unterkanten 8, 9 und(oder an den Oberkanten 10, 11 des Bandes eine Zahnung ausgebildet, welche später nach der Umformung des Bandes z.B. Rotoroder Statorzähne bilden sollen. Dies ist in Fig. 4 gezeigt.

Bei einem bevorzugten Rotor ist es möglich, diese Zähne 12 bereits vor dem Umformen des langestreckten Bandes 1 zur Ringform mit einer oder mehreren elektrischen Spulen 13 aus Spulendraht 14 zu bestücken. Die Zähne 12 sind dann frei zugänglich und können günstigerweise auch maschinell bewickelt werden, was den Montageaufwand erheblich vereinfacht. Der Spulendraht 14 ist vorzugsweise aus einem kupferhaltigen und/oder einem aluminiumhaltigen Material gefertigt.

Ebenso einfach kann nunmehr eine etwaige elektrische Isolation zwischen dem Bandmaterial und der elektrischen Spule 13, insbesondere eine Nutfußisolation, in die Bereiche zwischen den Zähnen 12 angebracht werden. Bei einer geschlossenen Ringform ist die Montage einer Nutfußisolation erheblich erschwert.

Neben dem Vorteil der möglichen maschinellen Fertigung bei der Spulenmontage ist ein weiterer Vorteil darin zu sehen, daß der Füllgrad der elektrischen Spulen zwischen den Zähnen 12 durch die freie Zugänglichkeit beim Wickeln verbessert werden kann, womit der Wirkungsgrad einer elektrischen Maschine verbessert wird.

Eine bevorzugte Maßnahme besteht darin, den Spulendraht 14 bereits beim Aufwickeln zur Spule 13 in seiner Querschnittsform so zu verändern, daß der Füllfaktor der Drähte zwischen den Zähnen nach dem Biegen möglichst groß ist und sich der Draht 14 den dann vorhandenen Krümmungen und Winkeln des Bandes 1 und der Zähne 12 möglichst gut anpassen kann.

Eine weitere günstige Ausführung ist, den Außendurchmesser der Spule 13 zu verändern, insbesondere die Wicklungsbreite entlang eines Zahnes 12. Zweckmäßigerweise befindet der größte Außendurchmesser der Spule am künftigen Nutfuß des Bandes 1.

Besonders bei starren Spulendrähten mit großen Querschnitt ist es schwierig, einen hohen Füllfaktor des Spulenmaterials zu erzielen. Die freie Zugänglichkeit der Zähne 12 des Bandes 1 und die Möglichkeit, Spulendraht und Spule bereits in gewünschter Weise vorzuformen, stellt eine deutliche Verbesserung und Vereinfachung bei der Herstellung einer elektrischen Maschine dar.

Anschließend wird das Band 1 zum Stator oder Rotor umgeformt. Dies kann zweckmäßigerweise auf zwei Arten erfolgen. Entweder wird das Band 1 mit einem geeigneten Werkzeug gebogen und in eine geschlossene Ringform gebracht, indem das die beiden Bandenden verbunden werden. Oder das elektromagnetische Element wird aus mehreren solchen Bändern in Umfangsrichtung zusammengesetzt, bis eine geschlossener Ringform entsteht.

Die Ringform wird in ihrer endgültigen Form fixiert. Die Stoßnaht kann mit einem geeigneten Fügeprozeß verschlossen, insbesondere verschweißt oder verklebt werden, um Luftspalte möglichst zu minimieren. Die Nahtstellen des gebogenen Bandes 1 verlaufen in einer Ebene, welche senkrecht zur zentralen Rotationsachse des ringförmigen Elements angeordnet ist.

Die Stege 5 können nun nochmals günstig verwendet werden, indem das Material der Stege beim Verschweißen der aufeinander gestapelten Bleche auf der Mantelfläche des ringförmigen Elements verwendet wird, wenn das Band 1 aus einem Blechpaket gebildet ist.

Der erfindungsgemäße Stator bzw. Rotor ist für verschiedene elektrische Maschinen, insbesondere für eine Reluktanzmaschine oder auch eine Asynchronmaschine geeignet.

Der ganz besondere Vorteil ist hier, daß die erfindungsgemäße Herstellung des Stators eine erhebliche Materialersparnis ermöglicht. Beim Ausstanzen von Statorblechen mit geschlossenem Umfang fällt eine erhebliche Menge an Materialabfall an, sowohl aus dem Inneren des Stators als auch, insbesondere bei runden Statorblechen, aus dem Außenbereich. Beim Ausstanzen von langgestreckten Bändern, welche anschließend erst zu einem geschlossenen Umfang gebogen oder zusammengesetzt werden, kann das Ausgangsmaterial wegen der günstigeren Geometrie der Bänder besser genutzt und die Abfallmenge reduziert werden. Daraus folgt auch eine beträchtliche Kostenersparnis bei der Fertigung einer elektrischen Maschine.

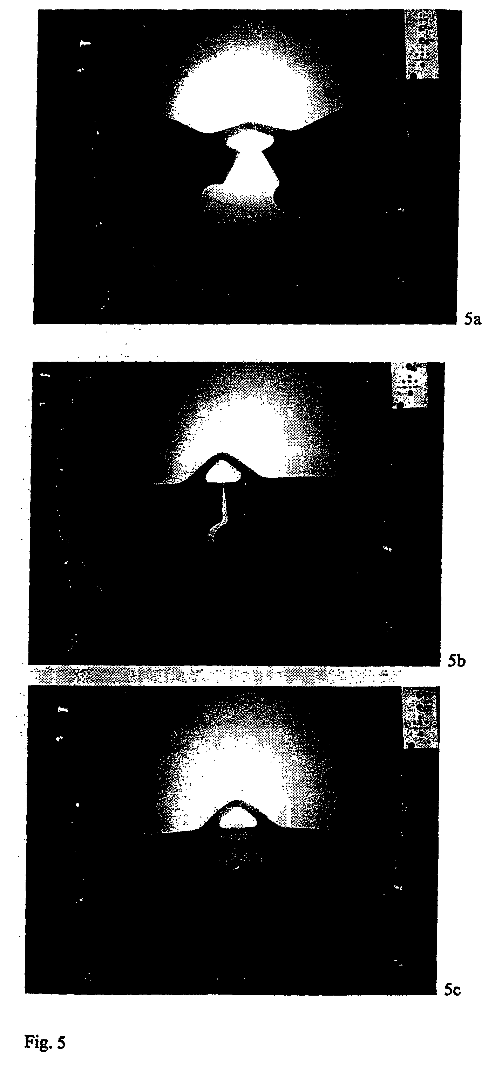

In Fig. 5 sind mehrere Teilschritte vor (a), während (b), Nach (c) dem Umformen eines erfindungsgemäßen Bandes zu einem ringförmigen Element dargestellt. Dabei ist in Draufsicht jeweils ein Bereich nahe eines Steges 5 zu sehen, um zu die Wirkung des Steges 5 während des Biegevorgangs weiter zu verdeutlichen.

In Fig. 5a, vor dem Biegevorgang, ist das Band 1 noch in im wesentlichen langgestreckter Form zu sehen. In Fig. 5b ist das Band schon soweit gebogen, daß sich die beiden durch den Steg verbundenen Segmente an einer Ecke berühren. In Fig. 5c ist der Biegevorgang abgeschlossen, und beide Segmente stoßen formschlüssig aneinander. Die Stoßkante ist so gut geschlossen, daß sie optisch dicht ist.

Beim Biegen wird der Steg unter Zugspannung gesetzt und erzeugt dadurch eine Hebelwirkung, welche die Stoßkanten der beiden Segmente parallel zueinander zieht. Diese Hebelwikrung wird dann durch die Zahnung, hier eine Zentriernocke, in den sich gegenüber liegenden Segmentkanten unterstützt.

Der Steg, der vor dem Biegen mit den Kanten der Segmente im wesentlichen eine Rautenform umschloß, wird dabei in etwa zu einem Dreieck in die Länge gezogen.

Wird ein ringförmiges Element gebogen, welches unterschiedliche Außendurchmesser aufweist, liegen die Stege vorzugsweise auf einem Radius. Dies wird durch ein mehr oder weniger tiefes Einlassen der Stege in das Band und damit in den Radius des ringförmigen Elements erzielt.

Das erfindungsgemäße Band erlaubt die Fertigung von ringförmigen elektromagnetischen Elementen, wie etwa Statoren und Rotoren, mit einer deutlichen Material- und Kostenersparnis. So kann bei einem bevorzugten Stator ca. 10% Material eingespart werden, wenn dieser aus einem Band und nicht aus einem üblichen runden Blech gefertigt wird. Außerdem wird durch die Zugänglichkeit der Zähne, etwa der Statorzähne, die Möglichkeit gegeben, einen optimierten Kupferfüllfaktor bei der Montage von elektrischen Spulen zu erzielen.

## Patentansprüche

1. Band zur Herstellung eines ringfömigen Elements einer elektrischen Maschine durch Umformen eines im wesentlichen langgestreckten Bandes, wobei das Band (1) eine elektromagnetische Wirkfläche (2, 3, 6, 7) aufweist, die senkrecht zu einer Rotationsachse des ringförmigen Elements ausgerichtet ist, wobei das Band (1) aus voneinander getrennten Segmenten (2, 3, 6, 7) besteht, welche zusammengenommen die Wirkfläche des Elements bilden und benachbarte Segmente (2, 3, 6, 7) durch jeweils einen Steg (S, 5) direkt verbunden sind,
**dadurch gekennzeichnet,**
**daß** der Steg (S, 5) so an der Elementaußenseite (8, 9) angeformt ist, daß der Steg (S, 5) außerhalb der Wirkfläche des elektromagnetischen Elements verläuft.

2. Band nach Anspruch 1,
**dadurch gekennzeichnet,**
**daß** der Steg (5) im Bereich der Stegmitte (5.1) seine kleinste Breite aufweist.

3. Band nach Anspruch 1,
**dadurch gekennzeichnet,**
**daß** der Steg (5) und ein erstes, direkt mit dem Steg verbundenes Segment (6) und ein dem ersten Segment direkt benachbartes und direkt mit dem Steg (5) verbundenes zweites Segment (7) des Bandes (1) ein Gebiet umschließen, das annähernd Rautenform aufweist.

4. Band nach Anspruch 1,
**dadurch gekennzeichnet,**
**daß** eine längere Diagonale (D1) der Rautenform zwischen Mündungspunkten (M1, M2) des Stegs (5) in das erste und das zweite Segment (6, 7) verläuft und eine kürzere Diagonale (D2) bei der Stegmitte (5.1) mündet.

5. Band nach Anspruch 1,
**dadurch gekennzeichnet,**
**daß** der Steg (5) im Bereich der Stegmitte (5.1) eine geringere Breite aufweist als an Mündungsbereichen (M1, M3; M2, M4) des Stegs in den ersten und zweiten Bereich (6, 7) des Bandes (1).

6. Band nach Anspruch 3,
**dadurch gekennzeichnet,**
**daß** sich die rautennahe Kontur des Stegs (5) im Bereich der Stegmitte (5.1) an einen Kreisbogen eines ersten Kreises (K1) anschmiegt, dessen Mittelpunkt (M) auf der kürzeren Diagonalen (D2) der Rautenform liegt, wobei der Radius (R1) des Kreises (K1) kleiner ist als die kürzere Diagonale (D2).

7. Band nach Anspruch 1,
**dadurch gekennzeichnet,**
**daß** seitliche Kanten (2.1, 3.1, 6.1, 7.1) der Segmente (2, 3, 6, 7) so ausgebildet sind, daß beim Zusammenbiegen an einer Stoßnaht zusammenstoßende Kanten (2.1, 3.1, 6.1, 7.1) eine Verzahnung bilden.

8. Band nach Anspruch 1,
**dadurch gekennzeichnet,**
**daß** das Band (1) entlang seiner Längserstreckung zumindest auf der Seite der Stege (S, 5) und/oder auf der gegenüberliegenden Seite eine Zahnung (12) aufweist.

9. Band nach Anspruch 8,
**dadurch gekennzeichnet,**
**daß** mindestens ein Zahn (12) mit einer elektrischen Spule (13) aus Spulendraht (14) umwickelt ist.

10. Band nach Anspruch 9,
**dadurch gekennzeichnet,**
**daß** der Spulendraht (14) entlang seiner Länge eine veränderliche Querschnittsform aufweist, so daß der Spulendraht entsprechend der späteren Formgebung nach dem Biegen des Bandes (1) vorgeformt ist.

11. Band nach Anspruch 9,
**dadurch gekennzeichnet,**
**daß** der Außendurchmesser der Spule (13) entsprechend der späteren Formgebung nach dem Biegen des Bandes (1) vorgeformt ist.

12. Verwendung des Bandes nach einem der vorangegangenen Ansprüche zur Herstellung eines Stators und/oder Rotors für eine elektrische Maschine.

## Claims

1. Strip for producing an annular element of an electric machine by converting an essentially elongated strip, whereby the strip (1) has an electromagnetic, effective area (2, 3, 6, 7) which is perpendicular in relation an axis of rotation of the annular element, whereby the strip (1) comprises separate segments (2, 3, 6, 7), which taken together form the effective area of the element and adjacent segments (2, 3, 6, 7) are in each case directly connected by a strap (S, 5),
**characterized in that**
that the strap (S, 5) is on the outer side (8, 9) of the of the strap (S, 5) such that the strap (S, 5) runs outside of the effective area of the electromagnetic element.

2. Strip in accordance with claim 1,
**characterized in that**
the strap (5) has its smallest width in the area of its centre (5.1).

3. Strip in accordance with claim 1,
**characterized in that**
the strap (5) and a first segment (6) which is directly connected to the strap, and a second segment (7) of the strip (1) which is immediately adjacent to the first segment and is directly connected to the strap (5), enclose an area which is approximately diamond-shaped.

4. Strip in accordance with claim 1,
**characterized in that**
a longer diagonal (D1) of the diamond runs through the first and second segment (6, 7), between opening points (o1, o2), and a shorter diagonal (D2) runs to the centre of the given strap (5.1).

5. Strip in accordance with claim 1,
**characterized in that**
the strap (5) has a narrower width in the area of its centre (5.1) than at opening areas (o1, o3; o2, o4) of the strap in the first and second area (6, 7) of the strip (1).

6. Strip in accordance with claim 3,
**characterized in that**
the border of the strap (5), next to the diamond, nestles, in the area of the centre of the strap (5.1), against an arch of a first circle (c1), the central point (M) of which lies on the shorter diagonal (D2) of the diamond, whereby the radius (R1) of the circle (c1) is smaller than the shorter diagonal (D2).

7. Strip in accordance with claim 3,
**characterized in that**
the side rims (2.1, 3.1, 6.1, 7.1) of the segments (2, 3, 6, 7) are developed such that rims coming up against each other (2.1, 3.1, 6.1, 7.1) form toothing when curving together at a butt join.

8. Strip in accordance with claim 1,
**characterized in that**
the strip (1) has, along its lengthwise extension, at least on the side of the straps (S, 5) and/or on the opposite side, a tooth construction (12).

9. Strip in accordance with claim 8,
**characterized in that**
at least one tooth (12) has an electrical coil (13) of coil wire (14) wound round it.

10. Strip in accordance with claim 9,
**characterized in that**
the coil wire (14), over its length, has a varying cross-sectional form, such that the coil wire is pre-formed in accordance with the subsequent forming after bending the strip (1).

11. Strip in accordance with claim 9,
**characterized in that**
the outer diameter of the coil (13) is pre-formed in accordance with the subsequent shaping after the bending of the strip (1).

12. Use of the strip in accordance with one of the foregoing claims for producing a stator and/or a rotor for an electric machine.

## Revendications

1. Bande pour réaliser un élément annulaire d'un groupe électrique par déformation d'une bande sensiblement allongée, la bande (1) présentant une surface d'action électromagnétique (2, 3, 6, 7) qui est orientée perpendiculairement à un axe de rotation de l'élément annulaire, la bande (1) étant constituée par des segments (2, 3, 6, 7) séparés les uns des autres qui, en considérés conjointement, forment la surface d'action de l'élément, et les segments voisins (2, 3, 6, 7) étant reliés directement par une barrette respective (S, 5), **caractérisée en ce que** la barrette (S, 5) est conformée de telle sorte sur le côté extérieur (8, 9) de l'élément que la barrette (S, 5) s'étend à l'extérieur de la surface d'action de l'élément électromagnétique.

2. Bande selon la revendication 1, **caractérisée en ce que** la barrette (5) présente sa plus petite largeur dans la zone du milieu de barrette (5.1).

3. Bande selon la revendication 1, **caractérisée en ce que** la barrette (5) et un premier segment (6) relié directement à la barrette ainsi qu'un deuxième segment (7), directement voisin du premier segment et relié directement à la barrette (5), de la bande (1) entourent une zone qui est approximativement en forme de losange.

4. Bande selon la revendication 1, **caractérisée en ce qu'**une diagonale longue (D1) de la forme en losange s'étend entre les points d'embouchure (M1, M2) de la barrette (5) dans le premier et dans le deuxième segment (6, 7), et une diagonale courte (D2) débouche au milieu de barrette (5.1).

5. Bande selon la revendication 1, **caractérisée en ce que** la barrette (5) présente dans la zone du milieu de barrette (5.1) une largeur inférieure à celle dans les zones d'embouchure (M1, M3 ; M2, M4) de la barrette dans la première et dans la deuxième zones (6, 7) de la bande (1).

6. Bande selon la revendication 3, **caractérisée en ce que** dans la zone du milieu de barrette (5.1) le contour en forme de losange de la barrette (5) épouse un arc d'un premier cercle (K1) dont le centre (M) se situe sur la diagonale courte (D2) de la forme en losange, le rayon (R1) du cercle (K1) étant inférieur à la diagonale courte (D2).

7. Bande selon la revendication 1, **caractérisée en ce que** des arêtes latérales (2.1, 3.1, 6.1, 7.1) des segments (2, 3, 6, 7) sont réalisées de telle sorte que des arêtes (2.1, 3.1, 6.1, 7.1) se rejoignant au niveau d'une jointure lors du pliage forment une denture.

8. Bande selon la revendication 1, **caractérisée en ce que** la bande (1) présente une denture (12) le long de son extension longitudinale au moins sur le côté des barrettes (S, 5) et/ou sur le côté opposé.

9. Bande selon la revendication 8, **caractérisée en ce qu'**au moins une dent (12) est enveloppée d'une bobine électrique (13) en fil de bobine (14).

10. Bande selon la revendication 9, **caractérisée en ce que** le fil de bobine (14) présente une forme de section variable le long de sa longueur, de sorte que le fil de bobine est préformé en correspondance de la conformation ultérieure après le cintrage de la bande (1).

11. Bande selon la revendication 9, **caractérisée en ce que** le diamètre extérieur de la bobine (13) est préformé en correspondance de la conformation ultérieure après le cintrage de la bande (1).

12. Application d'une bande selon l'une des revendications précédentes pour réaliser un stator et/ou un rotor pour le groupe électrique.
